# EUROPÄISCHE PATENTSCHRIFT

(11) **EP 1 649 113 B1**
(45) Veröffentlichungstag und Bekanntmachung des Hinweises auf die Patenterteilung: **13.02.2008**
(21) Anmeldenummer: 04763544.6
(22) Anmeldetag: 28.07.2004
(51) Int. Cl.: E03C 1/10

(54) **RÜCKFLUSSVERHINDERER**
BACKFLOW PREVENTER
DISPOSITIF ANTI-REFLUX

(30) Priorität: 28.07.2003 DE 10335379
(43) Veröffentlichungstag der Anmeldung: 26.04.2006
(73) Patentinhaber: Alfred Kärcher GmbH & Co. KG, 71364 Winnenden (DE)
(72) Erfinder: KRAUTER, Ronald, 71404 Korb (DE); KLÖPFER, Martin, 71364 Winnenden (DE)
(74) Vertreter: Karrais, Martin
(86) Internationale Anmeldenummer: PCT/EP2004/008416
(87) Internationale Veröffentlichungsnummer: WO 2005/012654

(56) Entgegenhaltungen:
- EP-A- 1 350 896
- DE-A- 2 424 978
- DE-B- 10 335 379
- DE-B- 10 335 380

## Beschreibung

Die Erfindung betrifft einen Rückflußverhinderer, insbesondere für den Anschluß eines Hochdruckreinigungsgerätes an eine Trinkwasserversorgungsleitung, mit einem Gehäuse, das eine Einlaßöffnung, eine Auslaßöffnung sowie eine in Durchströmungsrichtung zwischen der Einlaß- und der Auslaßöffnung angeordnete Leckageöffnung aufweist und das ein erstes und ein zweites Rückschlagventil aufnimmt, die jeweils ein Ventilgehäuse und einen Schließkörper aufweisen und in Durchströmungsrichtung hintereinander angeordnet sind, wobei das erste Rückschlagventil im Gehäuse verschiebbar gehalten ist und durch Verschieben des ersten Rückschlagventiles eine Strömungsverbindung zwischen einem zwischen den beiden Rückschlagventilen angeordneten Innenraum des Gehäuses und der Leckageöffnung freigebbar bzw. abtrennbar ist.

Derartige Rückflußhinderer werden auch als "Rohrunterbrecher" bezeichnet und sind aus der Offenlegungsschrift DE 24 24 978 A1 bekannt. Werden Reinigungsgeräte, beispielsweise Hochdruckreinigurigsgeräte oder Waschmaschinen, an eine Trinkwasserversorgungsleitung angeschlossen, so muß sichergestellt werden, daß verschmutzte Reinigungsflüssigkeit nicht vom Reinigungsgerät in die Trinkwasserversorgungsleitung zurückgelangen kann. Zu diesem Zweck wird zwischen der Trinkwasserversorgungsleitung und dem Reinigungsgerät ein Rückflußverhinderer der eingangs genannten Art geschaltet. Dieser weist Rückschlagventile auf, um die Rückführung der verschmutzten Reinigungsflüssigkeit in die Trinkwasserversorgung zu unterbinden. Hierbei kommen zwei hintereinander geschaltete Rückschlagventile mit identischer Schließrichtung zum Einsatz, die gewährleisten, daß selbst bei Ausfall eines der beiden Rückschlagventile das jeweils andere Rückschlagventil die Absicherung ohne weiteres allein übernehmen kann.

Ein Innenraum des Gehäuses zwischen den beiden Rückschlagventilen steht mit einer Leckageöffnung in Strömungsverbindung, über die der Innenraum des Gehäuses entleert werden kann, falls der Differenzdruck (p₁-pᵢ) zwischen dem im Bereich der Einlaßöffnung herrschendem Druck (p₁) und dem im Bereich zwischen den beiden Rückschlagventilen herrschenden Druck (pᵢ) einen vorgegebenen Wert unterschreitet. So kann beispielsweise vorgesehen sein, daß der zwischen den beiden Rückschlagventilen angeordnete Innenraum des Gehäuses selbsttätig entleert werden kann, sobald der Differenzdruck zwischen dem im Bereich der Einlaßöffnung herrschenden Druck (p₁) und dem im Bereich des Innenraums herrschenden Druck (pᵢ) den Wert von 14 kPa unterschreitet (p₁-pᵢ<14 kPa).

Um den genannten Innenraum gegebenenfalls entleeren zu können, ist das erste Rückschlagventil im Gehäuse verschiebbar angeordnet. Je nach Stellung des ersten Rückschlagventiles kann dadurch eine Strömungsverbindung zwischen dem Innenraum und der Leckageöffnung freigegeben oder abgesperrt werden. Derartige Rückflußverhinderer haben sich in der Praxis insofern bewährt, als ein Rückfluß von verschmutzter Reinigungsflüssigkeit verhindert werden kann, indem die Rückschlagventile zuverlässig ihre Schließstellung einnehmen. In dieser Stellung kann allerdings eine Druckerhöhung im Bereich der Auslaßöffnung zu einer Beschädigung des Rückflußverhinderers oder des daran angeschlossenen Reinigungsgerätes führen. Derartige Druckerhöhungen können beispielsweise bei Hochdruckreinigungsgeräten kurzzeitig in Form von Druckspitzen auftreten, wenn die Hochdruckreinigungsgeräte abgeschaltet werden. Die Druckspitzen können durch kleine Wassermengen hervorgerufen werden, welche beim Ausschalten der Hochdruckreinigungsgeräte von deren Druck- in deren Saugraum gelangen und wegen des zum Einsatz kommenden Rückflußverhinderers nicht entweichen können.

Aufgabe der vorliegenden Erfindung ist es, einen Rückflußverhinderer der eingangs genannten Art derart weiterzubilden, daß eine unzulässige Druckerhöhung im Bereich der Auslaßöffnung auf konstruktiv einfache Weise vermieden werden kann.

Diese Aufgabe wird bei einem Rückflußverhinderer der gattungsgemäßen Art erfindungsgemäß dadurch gelöst, daß das zweite Rückschlagventil unter Aufrechterhaltung einer Verschiebbarkeit des ersten Rückschlagventiles verschiebbar im Gehäuse gehalten ist, wobei unabhängig von der Stellung des zweiten Rückschlagventiles die Strömungsverbindung zwischen dem Innenraum und der Leckageöffnung freigebbar bzw. abtrennbar ist.

Eine unzulässige Druckerhöhung im Bereich der Auslaßöffnung kann folglich durch Verschieben des zweiten Rückschlagventiles entgegen der Durchströmrichtung des Rückflußverhinderers zuverlässig vermieden werden. Erfindungsgemäß ist hierbei vorgesehen, daß trotz der verschieblichen Lagerung des zweiten Rückschlagventiles die Verschiebbarkeit des ersten Rückschlagventiles gewährleistet ist, so daß unabhängig von der Stellung des zweiten Rückschlagventiles mit Hilfe des ersten Rückschlagventiles die Strömungsverbindung zwischen dem Innenraum des Gehäuses und der Leckageöffnung in Abhängigkeit von dem im Innenraum herrschenden Druck freigegeben oder abgetrennt werden kann.

Der erfindungsgemäße Rückflußverhinderer weist somit eine Druckentlastungsfunktion auf, ohne daß hierzu kostenträchtige separate Bauteile zum Einsatz kommen müssen. Das Bauvolumen des Rückflußverhinderers kann hierbei verhältnismäßig gering gehalten werden, denn die verschiebliche Lagerung des zweiten Rückschlagventiles erfordert nur eine geringfügige Erhöhung des Bauvolumens verglichen mit bekannten Rückflußverhinderern.

Eine Verschiebebewegung des zweiten Rückschlagventiles wird bei der erfindungsgemäßen Ausgestaltung durch die Differenz der im Bereich der Einlaßöffnung und der Auslaßöffnung herrschenden Drücke gesteuert. Kommt der erfindungsgemäße Rückflußverhinderer beim Anschluß eines Hochdruckreinigungsgerätes an eine Trinkwasserversorgungsieitung zum Einsatz, so kann somit zuverlässig ein Druckanstieg beim Abschalten des Hochdruckreinigungsgerätes verhindert werden, indem das zweite Rückschlagventil eine Druckausgleichsbewegung entgegen der Durchströmungsrichtung durchführt.

Vorzugsweise ist die Verschiebebewegung des zweiten Rückschlagventiles durch Anschlagflächen begrenzt. So kann beispielsweise vorgesehen sein, daß das Gehäuse zwei im Abstand zueinander angeordnete Anschläge aufweist, an die das zweite Rückschlagventil in einer bezogen auf die Durchströmungsrichtung vorderen bzw, hinteren Endstellung anlegbar ist. Durch die beiden Anschläge wird somit der Bewegungsspielraum des zweiten Rückschlagventiles in Durchströmungsrichtung vorgegeben. Übersteigt der im Bereich der Einlaßöffnung herrschende Druck den Druck im Bereich der Auslaßöffnung, so nimmt das zweite Rückschlagventil selbsttätig seine vordere Endstellung ein, während es sich im Falle einer entgegengerichteten Druckdifferenz in Richtung der hinteren Endstellung verschiebt.

Bei einer bevorzugten Ausführungsform ist vorgesehen, daß das Ventilgehäuse des ersten Rückschlagventils zum Abtrennen der Strömungsverbindung zwischen dem Innenraum des Gehäuses und der Leckageöffnung dichtend an das zweite Rückschlagventil - beispielsweise an dessen Ventilgehäuse - anlegbar ist, wobei das Ventilgehäuse des ersten Rückschlagventiles in beiden Endstellungen des zweiten Rückschlagventiles zum Freigeben der Strömungsverbindung zwischen dem Innenraum und der Leckageöffnung vom zweiten Rückschlagventil abhebbar ist. Gemäß dieser Ausgestaltung übernimmt das Ventilgehäuse des ersten Rückschlagventiles die Funktion eines Schließorganes, mit dessen Hilfe die Strömungsverbindung zwischen dem Innenraum des Gehäuses und der Leckageöffnung abgetrennt bzw. freigegeben werden kann. Zum Abtrennen der Strömungsverbindung ist es lediglich erforderlich, das Ventilgehäuse des ersten Rückschlagventiles dichtend an das zweite Rückschlagventil anzulegen. Soll die Strömungsverbindung freigegeben werden, so kann hierzu das Ventilgehäuse des ersten Rückschlagventiles vom zweiten Rückschlagventil abgehoben werden. Eine derartige Abhebebewegung zum Freigeben der Strömungsverbindung ist in beiden Endstellungen des zweiten Rückschlagventiles möglich, so daß unabhängig von der Stellung des zweiten Rückschlagventiles sichergestellt ist, daß der Innenraum des Gehäuses entleert werden kann, falls der Differenzdruck zwischen dem im Bereich der Einlaßöffnung herrschenden Druck und dem im Bereich des Innenraums herrschenden Druck einen vorgegebenen Wert von beispielsweise 14 kPa unterschreitet.

Günstigerweise ist das Ventilgehäuse des ersten Rückschlagventiles becherförmig ausgestaltet und weist einen Ventilgehäuseboden mit einer Durchlaßöffnung auf, der einen Ventilsitz für den Schließkörper des ersten Rückschlagventiles ausbildet, sowie einen hülsenförmigen Ventilgehäusemantel, wobei die Leckageöffnung vom Ventilgehäusemantel des Ventilgehäuses abdeckbar ist. Das Ventilgehäuse des ersten Rückschlagventiles bildet somit einen Schieber zum Freigeben bzw. Abtrennen der Strömungsverbindung zwischen dem Innenraum und der Leckageöffnung.

Bei einer besonders bevorzugten Ausführungsform des erfindungsgemäßen Rückflußverhinderers weist das erste Rückschlagventil eine Schließfeder auf, die zwischen dem Schließkörper des ersten Rückschlagventiles und dem zweiten Rückschlagventil eingespannt ist. Die Schließfeder übernimmt hierbei eine dreifache Funktion, denn zum einen wird mit ihrer Hilfe der Schließkörper des ersten Rückschlagventiles mit einer Rückstellkraft in Richtung auf den zugeordneten Ventilsitz beaufschlagt. Zum Öffnen des ersten Rückschlagventiles ist es demzufolge erforderlich, den Schließkörper mit einer der Federkraft der Schließfeder entgegenwirkenden Öffnungskraft zu beaufschlagen. Zum zweiten beaufschlagt die sich am zweiten Rückschlagventil abstützende Schließfeder über den Schließkörper und den zugeordneten Ventilsitz des ersten Rückschlagventiles auch dessen Ventilgehäuse. Somit ist mittels der Schließfeder eine der Durchströmungsrichtung entgegen gerichtete Rückstellkraft auf das erste Rückschlagventil ausübbar dergestalt, daß das erste Rückschlagventil von der Schließfeder vorgespannt ist und entgegen der Wirkung der Schließfeder ausgehend von einer die Strömungsverbindung zwischen dem Innenraum des Gehäuses und der Leckageöffnung freigebenden Stellung in eine die genannte Strömungsverbindung absperrende Stellung verschiebbar ist. Eine zusätzliche Rückstellfeder für das erste Rückschlagventil kann dadurch entfallen. Zum dritten unterstützt die Schließfeder infolge der Abstützung am zweiten Rückschlagventil dessen Bewegung in Durchströmungsrichtung in eine Endstellung,

Von Vorteil ist es, wenn der Schließkörper des ersten Rückschlagventiles an einer Führung geführt ist, die am zweiten Rückschlagventil gehalten ist. So kann zum Beispiel vorgesehen sein, daß der Schließkörper über einen Führungszapfen in einer beispielsweise am Ventilgehäuse des zweiten Rückschlagventiles gehaltenen Führungsbuchse geführt ist. Hierbei ist es von besonderem Vorteil, wenn die Führungsbuchse einstückig mit dem Ventilgehäuse des zweiten Rückschlagventiles verbunden ist.

Der Schließkörper des ersten Rückschlagventiles kann beispielsweise als Ventilkolben ausgestaltet sein, wobei der Ventilkolben vorzugsweise kegelförmig ausgestaltet ist und in einer besonders bevorzugten Ausführungsform im Bereich seiner Dichtfläche einen Dichtring trägt.

Bei einer besonders kostengünstig herstellbaren Ausführungsform sind die Schließkörper der beiden Rückschlagventile identisch ausgestaltet. Die Schließkörper können daher jederzeit ausgetauscht werden, außerdem ermöglicht dies eine Herstellung in größeren Stückzahlen und die Ersatzteillagerung wird vereinfacht.

Zur Erzielung einer besonders einfachen Montage des Rückflußverhinderers ist es von Vorteil, wenn dessen Gehäuse zweiteilig ausgestaltet ist mit einem die Einlaßöffnung aufweisenden ersten Gehäuseteil und einem die Auslaßöffnung aufweisenden zweiten Gehäuseteil, wobei die beiden Gehäuseteile lösbar miteinander verbindbar sind und jeweils eines der Rückschlagventile aufnehmen. Vorzugsweise sind die beiden Gehäuseteile miteinander verschraubbar. Es kann vorgesehen sein, daß das zweite Gehäuseteil direkt mit dem Pumpenkopf eines Hochdruckreinigungsgerätes verbunden ist. Hierbei ist es günstig, wenn die beiden Gehäuseteile den Wasseranschluß der Hochdruckpumpe des Hochdruckreinigungsgerätes ausbilden.

Bei einer zweiteiligen Ausgestaltung des Gehäuses ist es günstig, wenn eines der beiden Gehäuseteile eine stirnseitige Anschlagfläche und das andere Gehäuseteil eine Innenschulter aufweist und das zweite Rückschlagventil zwischen der stirnseitigen Anschlagfläche und der Innenschulter hin- und herbewegbar ist, wobei die stirnseitige Anschlagfläche und die Innenschulter jeweils einen Anschlag ausbilden, an den das zweite Rückschlagventil in der bezogen auf die Durchströmungsrichtung vorderen bzw. hinteren Endstellung anlegbar ist. Durch die stirnseitige Anschlagsfläche und die Innenschulter der beiden Gehäuseteile werden in konstruktiv einfacher Weise die Endstellungen des zweiten Rückschlagventiles vorgegeben.

Um auf einfache Weise sicherzustellen, daß die beiden Gehäuseteile bei der Montage des Rückflußverhinderers eine derartige Lage zueinander einnehmen, daß der Bewegungsspielraum der beiden Rückschlagventile gewährleistet ist, ist es günstig, wenn die beiden Gehäuseteile einander zugeordnete Anschlagflächen aufweisen, an denen sie im montierten Zustand aneinander anliegen.

Die nachfolgende Beschreibung einer bevorzugten Ausführungsform der Erfindung dient im Zusammenhang mit der Zeichnung der näheren Erläuterung. Es zeigen :

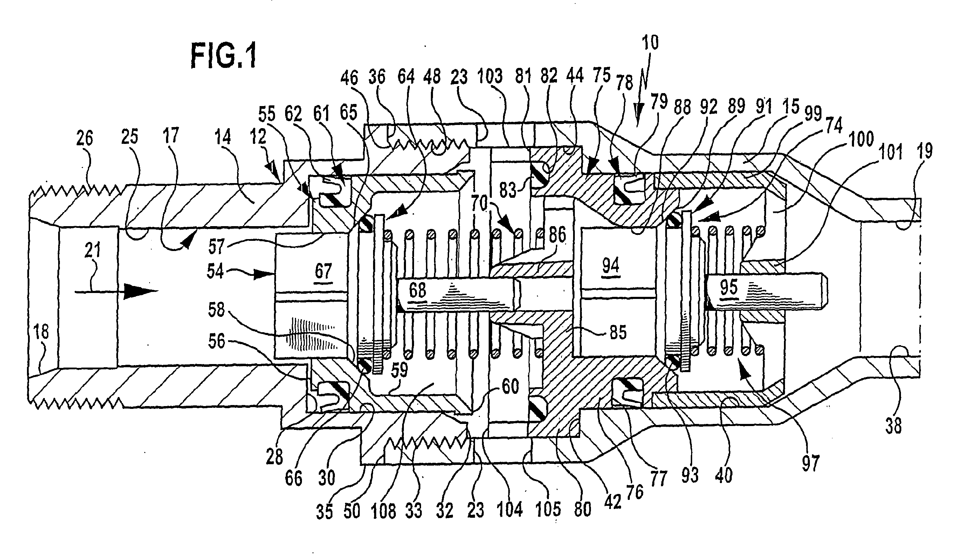

- Figur 1:: eine Längsschnittansicht eines erfindungsgemäßen Rückflußverhinderers im unbelasteten Zustand;
- Figur 2:: eine Längsschnittansicht entsprechend Figur 1 bei einseitiger, im Bereich einer Einlaßöffnung des Rückflußverhinderers wirkenden Druckbeaufschlagung;
- Figur 3:: eine Längsschnittansicht entsprechend Anspruch 1 beim Durchströmen des Rückflußverhinderers mit einer Flüssigkeit;
- Figur 4:: eine Längsschnittansicht entsprechend Figur 1 bei einer einseitigen Druckbeaufschlagung im Bereich einer Auslaßöffnung des Rückflußverhinderers.

In der Zeichnung ist ein insgesamt mit dem Bezugszeichen 10 belegter Rückflußverhinderer dargestellt mit einem zweiteiligen Gehäuse 12, das ein erstes Gehäuseteil 14 und ein zweites Gehäuseteil 15 aufweist und einen Strömungskanal 17 umgibt, der eine Einlaßöffnung 18 mit einer Auslaßöffnung 19 verbindet, wobei in Durchströmungsrichtung 21 ungefähr mittig zwischen der Einlaßöffnung 18 und der Auslaßöffnung 19 zumindest eine, vorzugsweise mehrere, über den Umfang des Gehäuses 12 verteilte Leckageöffnungen 23 in das Gehäuse 12 eingebracht sind.

Das erste Gehäuseteil 14 ist in Form eines Rohrleitungsabschnittes ausgestaltet und umfaßt einen sich an die Einlaßöffnung 18 anschließenden Einlaßkanal 25, der außenseitig zum Anschluß des Rückflußverhinderers 10 an eine Trinkwasserversorgungsleitung ein Außengewinde 26 aufweist und der über eine Stufe 28 in einen Kupplungsabschnitt 30 übergeht, dessen Innendurchmesser größer ist als der Innendurchmesser des Einlaßkanales 25 und der mit einer Stirnfläche 32 abschließt, deren Flächennormale parallel zur Durchströmungsrichtung 21 ausgerichtet ist. Der Stirnfläche 32 benachbart ist der Kupplungsabschnitt 30 des ersten Gehäuseteiles 12 von einem Außengewinde 33 umgeben, an das sich ein den Kupplungsabschnitt 30 in Umfangsrichtung umgebender, radial nach außen abstehender Bund 35 anschließt, der eine parallel zur Stirnfläche 32 ausgerichtete, dem Außengewinde 33 zugewandte Außenschulter 36 ausbildet.

Das zweite Gehäuseteil 15 ist ebenfalls in Form eines Rohrleitungsabschnittes ausgestaltet. Bei Einsatz des Rückflußverhinderers 10 bei einem Hochdruckreinigungsgerät kann das zweite Gehäuseteil 15 Bestandteil sein des Pumpenkopfes des Hochdruckreinigungsgerätes und kann in Verbindung mit dem ersten Gehäuseteil 14 den Wasseranschluß der Hochdruckpumpe des Hochdruckreinigungsgerätes darstellen.

Das zweite Gehäuseteil 15 umfaßt einen in die Auslaßöffnung 19 einmündenden Auslaßkanal 38, der sich in Richtung auf das erste Gehäuseteil 14 konisch erweitert und in einen Aufnahmeabschnitt 40 übergeht, an den sich entgegen der Durchströmungsrichtung 21 über eine Stufe 42 ein Eiriführurigsabschnitt 44 anschließt, dessen Innendurchmesser größer ist als der Innendurchmesser des Aufnahmeabschnittes 40. Der Einführungsabschnitt 44 schließt sich an eine Zugangsöffnung 46 an, in die der Kupplungsabschnitt 30 des ersten Gehäuseteiles 14 mit seinem vom Außengewinde 33 umgebenen Endbereich eintaucht. Das Außengewinde 33 des Kupplungsabschnitts 30 wirkt mit einem Innengewinde 48 des Einführungsabschnittes 44 zusammen. Dem ersten Gehäuseteil 14 zugewandt weist das zweite Gehäuseteil 15 eine Stirnfläche 50 auf, die an der Außenschulter 36 des ersten Gehäuseteils 14 flächig anliegt.

Wie bereits erläutert, weist das Gehäuse 12 eine oder mehrere über den Umfang des Gehäuses 12 verteilte Leckageöffnungen 23 auf. Diese sind im Bereich des Einführungsabschnittes 44 in das zweite Gehäuseteil 15 eingeformt.

Der Kupplungsabschnitt 30 des ersten Gehäuseteils 14 nimmt ein erstes Rückschlagventil 54 auf mit einem becherförmigen Ventilgehäuse 55, welches einen Ventilgehäuseboden 56 mit einer Durchlaßöffnung 57 und einem konischen Ventilsitz 58 umfaßt. An den Ventilgehäuseboden 56 schließt sich einstückig ein Ventilgehäusemantel 59 an, der hohlzylinderförmig ausgestaltet ist und dessen dem Ventilgehäuseboden 56 abgewandter freier Endbereich 60 angefast ist. Der Ventilgehäusemantel 59 ist im Kupplungsabschnitt 30 des ersten Gehäuseteils 14 gleitend geführt, und der Ventilgehäuseboden 56 ist in Umfangsrichtung von einem profilierten Dichtring 61 umgeben, der eine an der Innenwandung des Kupplungsabschnitts 30 dichtend anliegende Dichtlippe 62 aufweist.

Das erste Rückschlagventil 54 umfaßt außerdem einen Schließkörper in Form eines Ventilkolbens 64, der eine konische Dichtfläche 65 aufweist, an die sich in Durchströmungsrichtung 21 ein den Ventilkolben 65 in Umfangsrichtung umgebender O-Ring 66 anschließt. Auf seiner der Einlaßöffnung 18 zugewandten Vorderseite trägt der Ventilkolben 64 vier senkrecht zueinander ausgerichtete Führungsrippen 67, die die Durchlaßöffnung 57 durchgreifen und in der Durchlaßöffnung gleitend geführt sind. Auf seiner der Einlaßöffnung abgewandten Rückseite trägt der Ventilkolben 64 einen Führungsstift 68, der umgeben ist von einer Schließfeder 70.

Der Einführungsabschnitt 44 nimmt in Kombination mit dem Aufnahmeabschnitt 40 des zweiten Gehäuseteils 15 ein zweites Rückschlagventil 74 auf mit einem Ventilgehäuse 75, das einen im Aufnahmeabschnitt 40 gleitend geführten Ventilgehäusemantel 76 umfaßt, der außenseitig eine in Umfangsrichtung verlaufende Ringnut 77 aufweist, in der ein entsprechend dem Dichtring 61 ausgestalteter profilierter Dichtring 78 mit einer dichtend an der Innenwandung des Aufnahmeabschnitts 40 anliegenden Dichtlippe 79 angeordnet ist. An den Ventilgehäusemantel 76 schließt sich im Bereich der Stufe 42 einstückig ein Ventilgehäuseflansch 80 an, der eine parallel zur Stirnfläche 32 des ersten Gehäuseabschnitts 14 ausgerichtete Endfläche 81 aufweist, in die eine Nut 82 eingeformt ist, die einen Dichtring 83 aufnimmt. An den Ventilgehäuseflansch 80 schließt sich entgegen der Durchströmungsrichtung 21 einstückig ein gleitend an der Innenwandung des Einführungsabschnitts 44 anliegender Kragen 103 an, der eine parallel zur Stirnfläche 32 des ersten Gehäuseteiles 14 ausgerichtete Frontfläche 104 aufweist und in den ausgehend von der Frontfläche 104 fluchtend zu den Leckageöffnungen 23 Ausnehmungen 105 eingeformt sind.

Innenseitig sind an den Ventilgehäuseflansch 80 in Umfangsrichtung in gleichmäßigem Abstand zueinander drei Stege 85 angeformt, die einstückig mit einer koaxial zur DurclilaßöfFnung 57 des Ventilgehäuses 55 des ersten Rückschlagventiles 54 ausgerichteten Führungshülse 86 verbunden sind. Die Führungshülse 86 nimmt den freien Endbereich des Führungsstiftes 68 des ersten Rückschlagventils 54 auf.

Der Ventilgehäusemantel 76 des Ventilgehäuses 75 des zweiten Rückschlagventiles 74 umgibt eine Durchlaßöffnung 88 des zweiten Rückschlagventiles 74, an die sich in Durchströmungsrichtung 21 ein konischer Ventilsitz 89 anschließt.

Das zweite Rückschlagventil 74 weist einen Schließkörper in Form eines Ventilkolbens 91 auf, der identisch ausgestaltet ist wie der Ventilkolben 64 des ersten Rückschlagventiles 54. Er umfaßt eine konische Dichtfläche 92, an die sich in Durchströmungsrichtung 21 ein den Ventilkolben 91 in Umfangsrichtung umgebender O-Ring 93 anschließt. Auf seiner der Einlaßöffnung 18 zugewandten Vorderseite trägt der Ventilkolben 91 vier senkrecht zueinander ausgerichtete Führungsrippen 94, die in der Durchlaßöffnung 88 gleitend geführt sind, und auf seiner der Auslaßöffnung 19 zugewandten Rückseite trägt der Ventilkolben 91 einen Führungsstift 95, der umgeben ist von einer Schließfeder 97.

In Durchströmungsrichtung 21 schließt sich an den Ventilgehäusemantel 76 des zweiten Rückschlagventiles 74 eine an der Innenwandung des Aufnahmeabschnitts 40 gleitend geführte Stützhülse 99 an, die auf den der Auslaßöffnung 19 zugewandten Endbereich des Ventilgehäusemantels 76 aufgepreßt ist. An ihrem freien Endbereich trägt die Stützhülse 99 vier senkrecht zueinander ausgerichtete Stützarme 100, die mit einer koaxial zur Durchlaßöffnung 88 ausgerichteten Führungshülse 101 einstückig verbunden sind, die den freien Endbereich des Führungsstiftes 95 des zweiten Rückschlagventiles 74 aufnimmt.

Die Stützarme 100 bilden ein Widerlager für die Schließfeder 97, die zwischen den Stützarmen 100 und dem Ventilkolben 91 eingespannt ist und diesen mit einer elastischen Schließkraft beaufschlagt.

Das erste Rückschlagventil 54 und das zweite Rückschlagventil 74 sind im ersten Gehäuseteil 14 bzw. im zweiten Gehäuseteil 15 verschiebbar gehalten. Hierbei kann das zweite Rückschlagventil zwischen einer vorderen Endstellung, in der der Ventilgehäuseflansch 80 des Ventilgehäuses 75 an der Stufe 42 anschlägt, und einer hinteren Endstellung, in der die Frontfläche 104 des Kragens 103 des Ventilgehäuses 75 an der Stirnfläche 32 des ersten Gehäuseteiles 14 anschlägt, hin- und her verschoben werden. Durch die Ausnehmungen 105 im Kragen 103 wird sichergestellt, daß das zweite Rückschlagventil 74 unabhängig von seiner Stellung innerhalb des Gehäuses 12 die Leckageöffnungen 23 nicht behindert. Das erste Rückschlagventil 54 ist zwischen einer vorderen Endstellung, in der der freie Endbereich 60 des Ventilgehäuses 55 dichtend an der Dichtung 83 anliegt, und einer hinteren Endstellung, in der der Ventilgehäuseboden 56 an der Stufe 28 des ersten Gehäuseteiles 14 anliegt, verschiebbar. Nimmt das erste Rückschlagventil 54 seine vordere Endstellung ein, so wird eine Strömungsverbindung zwischen einem Innenraum 108 des Gehäuses 112, der in Durchströmungsrichtung 21 zwischen dem ersten und zweiten Rückschlagventil 54 bzw. 74 angeordnet ist, und den Leckageöffnungen 23 abgetrennt. Nimmt das erste Rückschlagventil 54 seine hintere Endstellung ein, so gibt es die Strömungsverbindung zwischen dem Innenraum 108 und den Leckageöffnungen 23 frei, so daß der Innenraum 108 über die Leckageöffnungen 23 entleert werden kann.

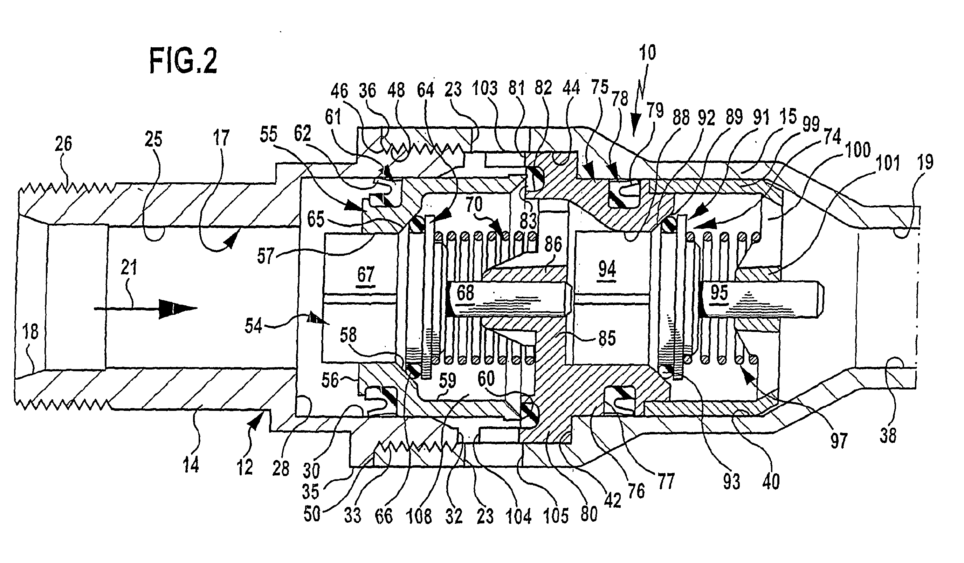

Das Gehäuse 12 des Rückflußverhinderers 10 kann beispielsweise an den Sauganschluß eines Hochdruckreinigungsgerätes angeschlossen werden. Hierbei kann das zweite Gehäuseteil 15 einstückig mit einem Saugstutzen des Hochdruckreinigungsgerätes verbunden sein. Mit Hilfe des Außengewindes 26 läßt sich das Gehäuse 12 an eine Trinkwasserversorgungsleitung anschließen. Im angeschlossenen Zustand kann im Bereich der Einlaßöffnung 18 der in der Trinkwasserversorgungsleitung herrschende Wasserdruck wirken. Dies hat zur Folge, daß das erste Rückschlagventil 54 entgegen der elastischen Rückstellkraft der Schließfeder 70 in Durchströmungsrichtung 21 nach vorne verschoben wird, so daß es an der Dichtung 83 des zweiten Rückschlagventiles 74 dichtend anliegt und folglich die Strömungsverbindung zwischen dem Innenraum 108 und den Leckageöffnungen 23 absperrt. Gleichzeitig nimmt das zweite Rückschlagventil 74 aufgrund der vom ersten Rückschlagventil 54 ausgeübten Belastung eine vordere Endstellung ein, in der es an der Stufe 42 anliegt. Dies ist in Figur 2 dargestellt.

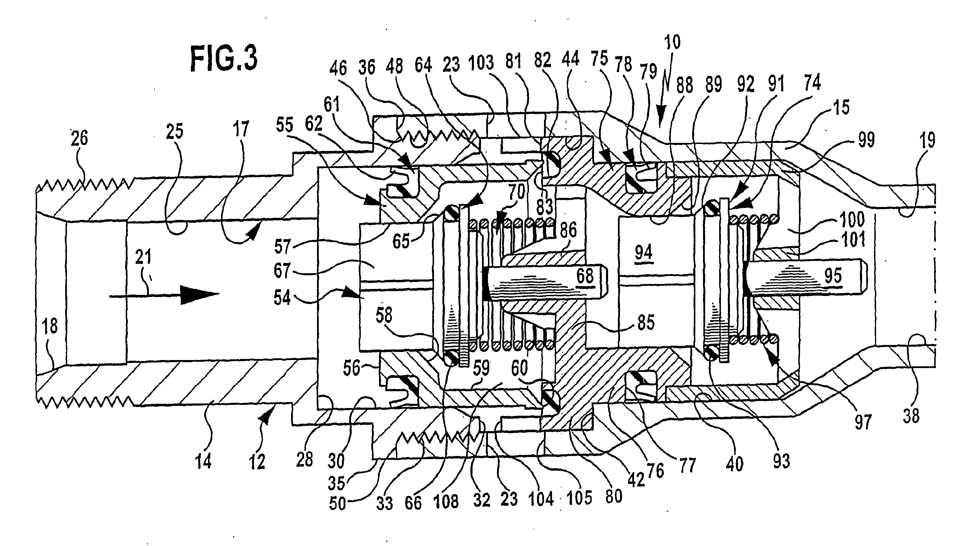

Wird das Hochdruckreinigungsgerät in Gang gesetzt, so stellt sich im Bereich der Auslaßöffnung 19 ein Unterdruck ein und es öffnen sich sowohl das zweite Rückschlagventil 74 als auch das erste Rückschlagventil 54. Folglich kann der Rückflußverhinderer 10 vom Wasser durchströmt werden. Dies ist in Figur 3 dargestellt.

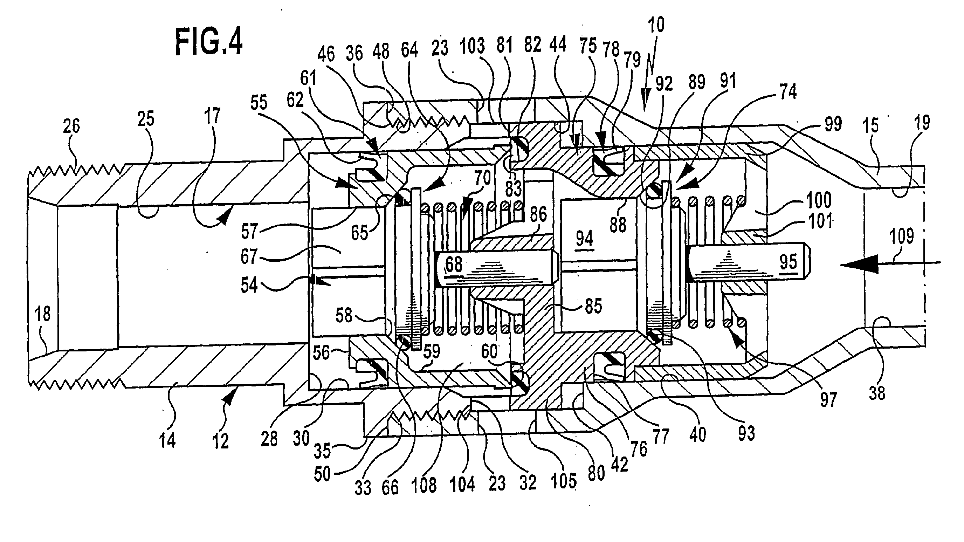

Wird das Hochdruckreinigungsgerät abgeschaltet, so nehmen die beiden Rückschlagventile 54 und 74 aufgrund der Schließkräfte der Schließfedern 70 bzw. 97 selbsttätig ihre Schließstellung ein. Beim Abschalten des Hochdruckreinigungsgerätes kann sich im Bereich der Auslaßöffnung 19 eine Druckerhöhung ausbilden, die das zweite Rückschlagventil 74 mit einer der Durchströmungsrichtung 21 entgegen gerichteten Rückstellkraft 109 beaufschlagt. Dies hat zur Folge, daß sowohl das zweite Rückschlagventil 74 als auch das an der Dichtung 83 anliegende erste Rückschlagventil 54 eine Ausweichbewegung entgegen der Durchströmungsrichtung 21 ausführen, wodurch die sich im Bereich der Auslaßöffnung 19 ausbildende Druckerhöhung abgebaut wird. Das zweite Rückschlagventil 74 stößt dann mit der Frontfläche 104 des Kragens 103 an der Stirnfläche 32 des ersten Gehäuseteiles 14 an. Dies ist in Figur 4 dargestellt.

Die Länge des Verschiebeweges, den das zweite Rückschlagventil 74 beim Übergang von seiner vorderen in seine hintere Endstellung überwinden kann, ist derart gewählt, daß sichergestellt ist, daß das erste Rückschlagventil 54 sich auch dann noch entgegen der Durchströmungsrichtung 21 vom Ventilgehäuse 75 des zweiten Rückschlagventiles 74 abheben kann, wenn das zweite Rückschlagventil 74 seine hintere Endstellung eingenommen hat. Auch in diesem Zustand kann also der Innenraum 108 über die Leckageöffnungen 23 entleert werden, sofern der Differenzdruck (p₁-pᵢ) zwischen dem im Bereich der Einlaßöffnung 18 herrschenden Druck (p₁) und dem im Bereich des Innenraumes 108 herrschenden Druck (pᵢ) einen vorgegebenen Wert, beispielsweise 14 kPa, unterschreitet. Ein derartiger Druck kann sich im Innenraum 108 beispielsweise ausbilden, wenn das zweite Rückschlagventil 74 undicht wird, so daß ein gegebenenfalls im Bereich der Auslaßöffnung 19 herrschender Überdruck bis in den Innenraum 108 einwirkt. Dies hätte dann zur Folge, daß sich das Ventilgehäuse 55 des ersten Rückschlagventiles 54 entgegen der Durchströmungsrichtung 21 von dem an der Stirnfläche 32 anliegenden Ventilgehäuse 75 des zweiten Rückschlagventiles 74 abhebt, so daß der Innenraum 108 über die Leckageöffnung 23 entleert werden kann.

Durch die verschiebliche Lagerung der beiden Rückschlagventile 54 und 74 im Gehäuse 12 und die Bemessung des möglichen Verschiebeweges des zweiten Rückschlagventiles 74 dergestalt, daß das erste Rückschlagventil 54 in beiden Endstellungen des zweiten Rückschlagventiles eine Strömungsverbindung zwischen dem Innenraum 108 und den Leckageöffnungen 23 freigeben kann, wird sichergestellt, daß beispielsweise beim Abschalten eines an den Rückflußverhinderer 10 angeschlossenen Hochdruckreinigungsgeräts sich ausbildende Druckspitzen zuverlässig abgefangen werden können, wobei gleichzeitig sichergestellt ist, daß ein Rücksaugen oder Rückdrücken von Flüssigkeit in das Trinkwasserversorgungsnetz zuverlässig verhindert ist.

## Patentansprüche

1. Rückflußverhinderer, insbesondere für den Anschluß eines Hochdruckreinigungsgerätes an eine Trinkwasserversorgungsleitung, mit einem Gehäuse (12), das eine Einlaßöffnung (18), eine Auslaßöffnung (19) sowie eine in Durchströmungsrichtung (21) zwischen der Einlaß- und der Auslaßöffnung angeordnete Leckageöffnung (23) aufweist und das ein erstes und ein zweites Rückschlagventil (54, 74) aufnimmt, die jeweils ein Ventilgehäuse (55, 75) und einen Schließkörper (64, 91) aufweisen und in Durchströmungsrichtung hintereinander angeordnet sind, wobei das erste Rückschlagventil (54) im Gehäuse (12) verschiebbar gehalten ist und durch Verschieben des ersten Rückschlagventiles (54) eine Strömungsverbindung zwischen einem zwischen den beiden Rückschlagventilen (54, 74) angeordneten Innenraum (108) des Gehäuses (12) und der Leckageöffnung (23) freigebbar bzw. abtrennbar ist, **dadurch gekennzeichnet, daß** das zweite Rückschlagventil (74) unter Aufrechterhaltung einer Verschiebbarkeit des ersten Rückschlagventiles (54) verschiebbar im Gehäuse (12) gehalten ist, wobei unabhängig von der Stellung des zweiten Rückschlagventiles (74) die Strömungsverbindung zwischen dem Innenraum (108) und der Leckageöffnung (23) freigebbar bzw. abtrennbar ist.

2. Rückflußverhinderer nach Anspruch 1, **dadurch gekennzeichnet, daß** das Gehäuse (12) zwei im Abstand zueinander angeordnete Anschläge aufweist, an die das zweite Rückschlagventil (74) in einer bezogen auf die Durchströmungsrichtung (21) vorderen bzw. hinteren Endstellung anlegbar ist.

3. Rückflußverhinderer nach Anspruch 2, **dadurch gekennzeichnet, daß** das Ventilgehäuse (55) des ersten Rückschlagventils (54) zum Abtrennen der Strömungsverbindung zwischen dem Innenraum (108) des Gehäuses (12) und der Leckageöffnung (23) dichtend an das zweite Rückschlagventil (74) anlegbar ist, wobei das Ventilgehäuse (55) des ersten Rückschlagventiles (54) in beiden Endstellungen des zweiten Rückschlagventiles (74) zum Freigeben der Strömungsverbindung zwischen dem Innenraum (108) und der Leckageöffnung (23) vom zweiten Rückschlagventil (74) abhebbar ist.

4. Rückflußverhinderer nach einem der voranstehenden Ansprüche, **dadurch gekennzeichnet, daß** das Ventilgehäuse (55) des ersten Rückschlagventiles (54) becherförmig ausgestaltet ist und einen eine Durchlaßöffnung (57) aufweisenden Ventilgehäuseboden (56) umfaßt, der einen Ventilsitz (58) für den Schließkörper (64) des ersten Rückschlagventils (54) ausbildet, sowie einen hülsenförmigen Ventilgehäusemantel (59), wobei die Leckageöffnung (23) vom Ventilgehäusemantel (59) abdeckbar ist.

5. Rückflußverhinderer nach einem der voranstehenden Ansprüche, **dadurch gekennzeichnet, daß** das erste Rückschlagventil (54) eine Schließfeder (70) aufweist, die zwischen dem Schließkörper (64) des ersten Rückschlagventils (54) und dem zweiten Rückschlagventil (74) eingespannt ist.

6. Rückflußverhinderer nach einem der voranstehenden Ansprüche, **dadurch gekennzeichnet, daß** der Schließkörper (64) des ersten Rückschlagventils (54) an einer Führung (86) geführt ist, die am zweiten Rückschlagventil (74) gehalten ist.

7. Rückflußverhinderer nach einem der voranstehenden Ansprüche, **dadurch gekennzeichnet, daß** die Schließkörper (64, 91) der beiden Rückschlagventile (54, 74) identisch ausgestaltet sind.

8. Rückflußverhinderer nach einem der voranstehenden Ansprüche, **dadurch gekennzeichnet, daß** das Gehäuse (12) zweiteilig ausgestaltet ist mit einem die Einlaßöffnung (18) aufweisenden ersten Gehäuseteil (14) und einem die Auslaßöffnung (19) aufweisenden zweiten Gehäuseteil (15), die lösbar miteinander verbindbar sind und jeweils eines der Rückschlagventile (54, 74) aufnehmen.

9. Rückflußverhinderer nach Anspruch 8, **dadurch gekennzeichnet, daß** eines der beiden Gehäuseteile (14) eine stirnseitige Anschlagfläche (32) und das andere Gehäuseteil eine Innenschulter (42) aufweist und daß das zweite Rückschlagventil (74) zwischen der stirnseitigen Anschlagfläche (32) und der Innenschulter (42) hin- und herverschiebbar ist, wobei die stirnseitige Anschlagfläche (32) und die Innenschulter (42) jeweils einen Anschlag ausbilden, an den das zweite Rückschlagventil (74) in der bezogen auf die Durchströmungsrichtung (21) vorderen bzw. hinteren Endstellung anlegbar ist.

10. Rückflußverhinderer nach Anspruch 8 oder 9, **dadurch gekennzeichnet, daß** die beiden Gehäuseteile (14, 15) einander zugeordnete Anschlagflächen (36, 50) aufweisen, an denen sie im montierten Zustand aneinander anlegbar sind.

11. Rückflußverhinderer nach einem der Ansprüche 8, 9 oder 10, **dadurch gekennzeichnet, daß** das zweite Gehäuseteil (15) mit einem Pumpenkopf eines Hochdruckreinigungsgerätes verbindbar ist.

12. Verwendung eines Rückflußverhinderers nach Anspruch 11, **dadurch gekennzeichnet, daß** die beiden Gehäuseteile (14, 15) einen Wasseranschluß einer Hochdruckpumpe des Hochdruckreinigungsgerätes ausbilden.

## Claims

1. A backflow preventer, particularly for the connection of a high-pressure cleaning appliance to a drinking water supply line, comprising a housing (12) which has an inlet opening (18), an outlet opening (19) and a leakage opening (23), arranged between the inlet and the outlet opening in the through-flow direction (21), and which houses a first and a second non-return valve (54, 74) which have respective valve housings (55, 75) and closing bodies (64, 91) and are arranged one after the other in the through-flow direction, wherein the first non-return valve (54) is held displaceably in the housing (12), and by means of displacement of the first non-return valve (54) a flow connection between an internal space (108) of the housing (12), arranged between the two non-return valves (54, 74), and the leakage opening (23) may be opened or cut off, **characterised in that** the second non-return valve (74) is held displaceably in the housing (12), preserving the displaceability of the first non-return valve (54), wherein the flow connection between the internal space (108) and the leakage opening (23) may be opened or cut off irrespective of the position of the second non-return valve (74).

2. A backflow preventer according to Claim 1, **characterised in that** the housing (12) has two stops arranged at a distance from one another, against which the second non-return valve (74) may be positioned in a front or rear end position with respect to the through-flow direction (21).

3. A backflow preventer according to Claim 2, **characterised in that**, in order to cut off the flow connection between the internal space (108) of the housing (12) and the leakage opening (23), the valve housing (55) of the first non-return valve (54) may be positioned against the second non-return valve (74) to effect sealing, wherein the valve housing (55) of the first non-return valve (54) in both end positions of the second non-return valve (74) may be lifted off the second non-return valve (74) in order to open the flow connection between the internal space (108) and the leakage opening (23).

4. A backflow preventer according to one of the preceding claims, **characterised in that** the valve housing (55) of the first non-return valve (54) is designed so as to be cup-shaped and comprises a valve housing base (56) having a passage opening (57), which valve housing base forms a valve seat (58) for the closing body (64) of the first non-return valve (54), as well as a sleeve-shaped valve housing shell (59), wherein the leakage opening (23) may be covered by the valve housing shell (59).

5. A backflow preventer according to one of the preceding claims, **characterised in that** the first non-return valve (54) has a closing spring (70), which is clamped between the closing body (64) of the first non-return valve (54) and the second non-return valve (74).

6. A backflow preventer according to one of the preceding claims, **characterised in that** the closing body (64) of the first non-return valve (54) is guided on a guide (86) which is held on the second non-return valve (74).

7. A backflow preventer according to one of the preceding claims, **characterised in that** the closing bodies (64, 91) of the two non-return valves (54, 74) are of identical design.

8. A backflow preventer according to one of the preceding claims, **characterised in that** the housing (12) is of two-part design comprising a first housing part (14) which has the inlet opening (18) and a second housing part (15) which has the outlet opening (19), which housing parts may be releasably joined together and each accommodate one of the non-return valves (54, 74).

9. A backflow preventer according to Claim 8, **characterised in that** one of the two housing parts (14) has an end-face stop surface (32) and the other housing part has an internal shoulder (42), and **in that** the second non-return valve (74) is displaceable to and fro between the end-face stop surface (32) and the internal shoulder (42), the end-face stop surface (32) and the internal shoulder (42) forming respective stops against which the second non-return valve (74) may be positioned in the front or rear end position with respect to the through-flow direction (21).

10. A backflow preventer according to Claim 8 or 9, **characterised in that** the two housing parts (14, 15) have stop surfaces (36, 50) coordinated with one another, at which stop surfaces they may be positioned against one another in the assembled state.

11. A backflow preventer according to one of Claims 8, 9 or 10, **characterised in that** the second housing part (15) may be connected to a pump head of a high-pressure cleaning appliance.

12. Use of a backflow preventer according to Claim 11, **characterised in that** the two housing parts (14, 15) form a water connection of a high-pressure pump of the high-pressure cleaning appliance.

## Revendications

1. Dispositif anti-reflux, en particulier destiné au raccordement d'un appareil de nettoyage haute pression à une conduite d'alimentation en eau potable, comportant un boîtier (12), qui présente une ouverture d'admission (18), une ouverture d'évacuation (19) ainsi qu'une ouverture de fuite (23) disposée entre l'ouverture d'admission et l'ouverture d'évacuation dans le sens de l'écoulement (21), et qui loge un premier clapet antiretour et un deuxième clapet antiretour (54, 74), qui présentent respectivement un boîtier de clapet (55, 75) et un corps de fermeture (64, 91) et sont disposés l'un derrière l'autre dans le sens de l'écoulement, où le premier clapet antiretour (54) est maintenu de manière à pouvoir se déplacer en translation dans le boîtier (12) et, grâce au déplacement en translation du premier clapet antiretour (54), une liaison d'écoulement est établie ou interrompue entre un espace interne (108), disposé entre les deux clapets antiretour (54, 74), du boîtier (12), et l'ouverture de fuite (23), **caractérisé en ce que** le deuxième clapet antiretour (74) est maintenu de manière à pouvoir se déplacer en translation dans le boîtier (12) tout en préservant une aptitude au déplacement en translation du premier clapet antiretour (54), moyennant quoi la liaison d'écoulement entre l'espace interne (108) et l'ouverture de fuite (23) peut être établie ou interrompue indépendamment de la position du deuxième clapet antiretour (74).

2. Dispositif anti-reflux selon la revendication 1, **caractérisé en ce que** le boîtier (12) présente deux butées disposées à une certaine distance l'une de l'autre, sur lesquelles vient s'appliquer le deuxième clapet antiretour (74) dans une position finale avant ou arrière par référence au sens d'écoulement (21).

3. Dispositif anti-reflux selon la revendication 2, **caractérisé en ce que** le boîtier de clapet (55) du premier clapet antiretour (54) permettant d'interrompre la liaison d'écoulement entre l'espace interne (108) du boîtier (12) et l'ouverture de fuite (23), peut être appliqué de manière étanche sur le deuxième clapet antiretour (74), moyennant quoi, dans les deux positions finales du deuxième clapet antiretour (74), le boîtier de clapet (55) du premier clapet antiretour (54) peut être soulevé par rapport au deuxième clapet antiretour (74) afin d'établir la liaison d'écoulement entre l'espace interne (108) et l'ouverture de fuite (23).

4. Dispositif anti-reflux selon l'une quelconque des revendications précédentes, **caractérisé en ce que** le boîtier de clapet (55) du premier clapet antiretour (54) est configuré sous la forme d'un godet, et comporte un fond de boîtier de clapet (56) présentant une ouverture de passage (57), laquelle forme un siège de soupape (58) pour le corps de fermeture (64) du premier clapet antiretour (54), ainsi qu'une enveloppe de boîtier de clapet (59) en forme de douille, moyennant quoi l'ouverture de fuite (23) peut être recouverte par l'enveloppe de boîtier de clapet (59).

5. Dispositif anti-reflux selon l'une quelconque des revendications précédentes, **caractérisé en ce que** le premier clapet antiretour (54) présente un ressort de fermeture (70), qui est serré entre le corps de fermeture (64) du premier clapet antiretour (54) et le deuxième clapet antiretour (74).

6. Dispositif anti-reflux selon l'une quelconque des revendications précédentes, **caractérisé en ce que** le corps de fermeture (64) du premier clapet antiretour (54) est guidé sur un guide (86), qui est maintenu sur le deuxième clapet antiretour (74).

7. Dispositif anti-reflux selon l'une quelconque des revendications précédentes, **caractérisé en ce que** les corps de fermeture (64, 91) des deux clapets antiretour (54, 74) sont configurés de manière identique.

8. Dispositif anti-reflux selon l'une quelconque des revendications précédentes, **caractérisé en ce que** le boîtier (12) est configuré en deux parties, avec une première partie de boîtier (14) présentant l'ouverture d'admission (18) et une deuxième partie de boîtier (15) présentant l'ouverture d'évacuation (19), qui peuvent être reliées l'une à l'autre de manière amovible et qui logent respectivement l'un des deux clapets antiretour (54, 74).

9. Dispositif anti-reflux selon la revendication 8, **caractérisé en ce que** l'une des deux parties de boîtier (14) présente une surface de butée du côté frontal (32) et l'autre partie de boîtier présente un épaulement interne (42), et **en ce que** le deuxième clapet antiretour (74) peut effectuer un mouvement de translation en va-et-vient entre la surface de butée du côté frontal (32) et l'épaulement interne (42), moyennant quoi la surface de butée du côté frontal (32) et l'épaulement interne (42) constituent respectivement une butée, sur laquelle vient s'appliquer le deuxième clapet antiretour (74) dans la position finale avant ou arrière par référence au sens d'écoulement (21).

10. Dispositif anti-reflux selon la revendication 8 ou 9, **caractérisé en ce que** les deux parties de boîtier (14, 15) présentent des surfaces de butée (36, 50) associées l'une à l'autre, sur lesquelles elles peuvent respectivement s'appliquer dans l'état monté.

11. Dispositif anti-reflux selon l'une quelconque des revendications 8, 9 ou 10, **caractérisé en ce que** la deuxième partie de boîtier (15) peut être reliée à une tête de pompe d'un appareil de nettoyage haute pression.

12. Utilisation d'un dispositif anti-reflux selon la revendication 11, **caractérisée en ce que** les deux parties de boîtier (14, 15) constituent un raccord destiné à l'eau d'une pompe haute pression de l'appareil de nettoyage haute pression.
